# FASCICULE DE BREVET EUROPEEN

(11) **EP 1 508 981 B1**
(45) Date de publication et mention de la délivrance du brevet: **13.09.2006**
(21) Numéro de dépôt: 04291657.7
(22) Date de dépôt: 30.06.2004
(51) Int. Cl.: H04B 7/26, H04Q 7/38

(54) **Procédé et dispositif de gestion de communications dans un réseau de communications à accès aléatoire**
Verfahren und System für die Kommunkationsverwaltung in einem Random Access Netzwerk
Method and system for communication management in a random access network

(30) Priorité: 22.08.2003 FR 0310092
(43) Date de publication de la demande: 23.02.2005
(73) Titulaire: ALCATEL, 75008 Paris (FR)
(72) Inventeur: Martin, Béatrice, 75005 Paris (FR)
(74) Mandataire: Hedarchet, Stéphane

(56) Documents cités:
- EP-A- 0 984 642
- WO-A-01/08315
- US-A- 5 745 484

## Description

L'invention concerne le domaine des réseaux de communications à accès aléatoire, et plus particulièrement la gestion des communications au sein de tels réseaux.

Dans certains réseaux du type précité, comme par exemple les réseaux comportant un accès ALOHA dit « à tranches d'accès » (ou « slotted »), les terminaux de communications ne peuvent transmettre leurs messages que pendant des instants autorisés par le réseau.

Plus précisément, lors de son premier accès au réseau un terminal demandeur doit transmettre à la station de base des signaux représentatifs d'un préambule définissant une demande d'accès en vue de transmettre un message. Pour ce faire, il transmet le préambule avec une signature, choisie de façon aléatoire parmi N signatures (par exemple N=16 dans le cas d'un réseau UMTS), dans un canal à accès aléatoire spécifique, appelé RACH (pour « Random Access Channel ») et dans une tranche temporelle d'accès (ou « slot ») de largeur prédéfinie. Dans un réseau à accès de type slotted ALOHA le préambule s'étend par exemple sur une durée égale à 4096 chips et la largeur d'une tranche est égale à 5120 chips (ce qui correspond à 1,3 ms).

Chaque terminal dispose de la cartographie des tranches d'accès pendant lesquelles il est autorisé à émettre ses préambules. Cette cartographie, qui est configurable, est diffusée périodiquement sur l'ensemble de la zone de couverture du réseau, à destination de l'ensemble des terminaux situés dans cette zone. Par ailleurs, la référence de temps de la station de base est diffusée périodiquement par le réseau sur l'ensemble de la zone de couverture, à destination de l'ensemble des terminaux situés dans cette zone, sur un canal de synchronisation dédié.

Le message associé au préambule transmis ne peut être émis par le terminal demandeur qu'à condition que ledit préambule ait été acquitté par le réseau, et plus précisément par la station de base. Si le terminal demandeur n'a pas reçu de message d'acquittement dans un délai d'acquittement prédéfini et configurable, il ré-émet un autre préambule dans une tranche d'accès. Le nombre de préambules pouvant être émis consécutivement et la périodicité d'émission des préambules sont prédéfinis et configurables. Ils sont diffusés périodiquement par le réseau sur l'ensemble de la zone de couverture, à destination de l'ensemble des terminaux situés dans cette zone.

Un préambule est dit acquitté lorsque la station de base a déterminé la présence du terminal qui l'a émis et lorsque le terminal a reçu de la station de base un message d'acquittement dans le délai d'acquittement précité.

Dans ce type de réseau, la référence (ou base) de temps diffusée, par exemple par un satellite, est reçue par les différents terminaux, présents dans la zone de couverture de ce satellite, avec un retard, par rapport à une référence, qui dépend de leurs positions respectives dans la zone. Chaque terminal doit caler sa base de temps sur la référence de temps du réseau. Or, du fait de la dispersion des temps de propagation entre le satellite et les modules de réception des terminaux, ces derniers ne sont pas synchronisés les uns par rapport aux autres. L'espacement entre les tranches d'accès autorisées est donc choisi de manière à définir un temps de garde.

Le document WO 01/08315 A2 décrit un système de communications pour la détermination de la position temporelle des intervalles temporels de communication. Le document EP 0984642A2 décrit une technique de transmission d'avance temporelle.

Lorsque la dispersion des temps de propagation est inférieure ou égale au temps de garde, les préambules émis par des terminaux différents sur des tranches d'accès différentes sont reçus par la station de base à l'intérieur des intervalles de temps qui correspondent aux tranches d'accès sans risque de décalage et/ou de recouvrement.

En revanche, lorsque la dispersion des temps de propagation est supérieure au temps de garde, les préambules émis par des terminaux différents sur des tranches d'accès différentes sont reçus par la station de base de façon décalée par rapport aux fenêtres de réception associées aux tranches d'accès. Cela peut survenir lorsque la zone de couverture est élargie, comme par exemple dans le cas d'une couverture de type « spot satellite ». Le décalage peut être si grand que des préambules peuvent être reçus dans le désordre. Par exemple, dans le cas d'une couverture spot européenne, la dispersion des temps de propagation sur des trajets aller-retour concernant des satellites situés entre 20° et 40° d'élévation peut atteindre 13 ms, ce qui correspond à un décalage d'environ 10 tranches d'accès. Dans le cas d'une couverture spot nationale, cette dispersion peut atteindre 4 ms, ce qui correspond à un décalage d'environ 3 tranches d'accès.

Ces décalages sont de nature à augmenter les risques de collision entre préambules, c'est-à-dire la probabilité pour que plusieurs préambules soient reçus par la station de base dans une même tranche d'accès. Dans l'exemple précité, cela se traduit par le passage d'un accès de type spotted ALOHA à un accès de type ALOHA, pour la partie réception, et par conséquent par une réduction de la capacité d'accès. Par ailleurs, du fait de ces décalages les fenêtres temporelles de réception de la station de base, calées sur sa référence de temps et de largeur égale à celle des tranches d'accès, ne sont plus adaptées.

Afin de remédier à cet inconvénient, et plus précisément de prendre en compte la dispersion des temps de propagation, il a été proposé de définir des fenêtres temporelles de réception s'étendant sur plusieurs tranches d'accès. Mais, cette solution présente plusieurs inconvénients. En effet, plusieurs préambules reçus à l'intérieur d'une même fenêtre temporelle de réception ne pourront pas être distingués alors qu'ils ne se recouvrent pas (et donc qu'il n'y a pas collision). De plus, du fait de l'augmentation de la largeur des fenêtres temporelles de réception, les échantillons, qui constituent les signaux définissant les préambules reçus à l'intérieur d'une fenêtre temporelle de réception, doivent être stockés dans une mémoire tampon pendant une durée plus longue, ce qui introduit un délai de traitement supplémentaire. Enfin, le temps de calcul est augmenté, sans possibilité de parallélisation.

L'invention a donc pour but d'améliorer la situation.

Elle propose à cet effet un procédé de gestion de communications, pour un réseau de communications à accès aléatoire, consistant :
- à décomposer des intervalles temporels en tranches, associées chacune à une tranche d'accès pendant laquelle un terminal peut transmettre une demande d'accès au réseau, et de largeur choisie, supérieure ou égale à la durée d'une demande d'accès (ou préambule), puis à subdiviser ces intervalles temporels en sous-intervalles comportant un nombre de tranches consécutives au moins égal à deux, et à interdire aux terminaux la transmission de leurs demandes d'accès pendant l'une au moins des tranches d'accès associées aux tranches de chaque sous-intervalle tout en les y autorisant pendant les tranches d'accès non interdite,
- à définir dans chaque sous-intervalle un nombre, au moins égal au nombre de tranches qu'il contient, de fenêtres temporelles de traitement de largeur sensiblement égale à celle d'une tranche et décalées temporellement, et
- à déduire de la fenêtre d'appartenance d'une demande d'accès reçue au moins un délai d'accès du terminal demandeur par rapport à une référence, puis à transmettre un message d'acquittement à ce terminal demandeur à un instant choisi en fonction de ce délai d'accès, de sorte qu'il puisse le recevoir dans un intervalle temporel d'acquittement défini préalablement.

Le procédé selon l'invention peut comporter d'autres caractéristiques qui pourront être prises séparément ou en combinaison, et notamment :
- on peut déduire du délai d'accès l'instant de réception du message qui doit être transmis par un terminal consécutivement à la réception d'un message d'acquittement émis en réponse à une demande d'accès associée au dit message,
- on peut stocker le délai d'accès en correspondance d'un identifiant du terminal demandeur, afin de pouvoir caler la réception de chaque message transmis ultérieurement par ce terminal,
- le nombre de tranches d'un sous-intervalle peut être choisi de sorte qu'il corresponde à la dispersion maximale des délais d'accès des terminaux situés dans une zone de couverture du réseau. Par exemple, le nombre de tranches d'un sous-intervalle peut être égal à trois, et l'on peut interdire l'utilisation de deux tranches consécutives sur trois dans chaque sous-intervalle,
- certaines au moins des fenêtres peuvent présenter une limite commune et/ou certaines des fenêtres peuvent présenter un recouvrement temporel, par exemple égal à environ 50%,
- l'intervalle temporel est égal à n fois la durée d'une trame radio constituant le message associé à une demande d'accès, n étant supérieur ou égal à un. Par exemple, n est égal à 2,
- on peut réceptionner les signaux représentatifs des demandes d'accès en parallèle sur chacune des fenêtres temporelles de traitement des sous-intervalles afin de déduire en parallèle des fenêtres d'appartenance respectives des signaux reçus les délais d'accès des terminaux demandeurs par rapport à la référence, puis transmettre des messages d'acquittement aux terminaux demandeurs à des instants choisis en fonction de leurs délais d'accès respectifs, afin qu'ils puissent les recevoir dans l'intervalle temporel d'acquittement défini préalablement,
- on peut réceptionner les signaux représentatifs des demandes d'accès pendant toute la durée d'un sous-intervalle, et associer un délai d'accès à chaque demande d'accès reçue pendant ce sous-intervalle en fonction de la fenêtre temporelle de traitement au cours de laquelle il a été reçu, puis transmettre des messages d'acquittement aux terminaux demandeurs à des instants choisis en fonction de leurs délais d'accès respectifs, de sorte qu'ils puissent les recevoir dans l'intervalle temporel d'acquittement défini préalablement.

L'invention propose également un dispositif de gestion de communications, pour une station de base d'un réseau de communications à accès aléatoire, comprenant des moyens de traitement chargés de :
- décomposer des intervalles temporels en tranches, associées chacune à une tranche d'accès pendant laquelle un terminal peut transmettre une demande d'accès au réseau, et de largeur choisie, supérieure ou égale à la durée d'une demande d'accès,
- subdiviser ces intervalles temporels en sous-intervalles comportant un nombre de tranches consécutives au moins égal à deux,
- désigner dans chaque sous-intervalle au moins une tranche associée à une tranche d'accès interdite pendant laquelle les terminaux sont interdits de transmettre leurs demandes d'accès au réseau,
- définir dans chaque sous-intervalle un nombre, au moins égal au nombre de tranches qu'il contient, de fenêtres temporelles de traitement de largeur sensiblement égale à celle d'une tranche et décalées temporellement, et
- en cas de réception d'une demande d'accès transmise par un terminal demandeur, déduire de la fenêtre d'appartenance de cette demande d'accès au moins un délai d'accès du terminal demandeur par rapport à une référence, puis déterminer à partir de ce délai d'accès un instant de transmission au terminal demandeur d'un message d'acquittement, de sorte qu'il puisse le recevoir dans un intervalle temporel d'acquittement défini préalablement.

Le dispositif selon l'invention peut comporter d'autres caractéristiques qui pourront être prises séparément ou en combinaison, et notamment :
- des moyens de traitement chargés de déterminer à partir du délai d'accès l'instant de réception du message que doit transmettre un terminal consécutivement à la réception d'un message d'acquittement émis en réponse à une demande d'accès associée à ce message,
- une mémoire capable de stocker, sur ordre des moyens de traitement, chaque délai d'accès déduit en correspondance d'un identifiant du terminal demandeur. Dans ce cas, les moyens de traitement sont agencés de manière à ordonner le calage en réception de la station de base sur chaque message transmis par un terminal en fonction du délai d'accès associé à son identifiant dans la mémoire,
- un nombre de tranches d'un sous-intervalle choisi de sorte qu'il corresponde à la dispersion maximale des délais d'accès des terminaux situés dans une zone de couverture du réseau,
- des moyens de traitement chargés de définir certaines au moins des fenêtres temporelles de traitement de sorte qu'elles présentent deux à deux une limite commune et/ou un recouvrement temporel, par exemple égal à environ 50%,
- des moyens de traitement chargés de réceptionner les signaux, représentatifs des demandes d'accès, en parallèle sur chacune des fenêtres de traitement des sous-intervalles, afin de déduire en parallèle des fenêtres d'appartenance respectives des signaux reçus les délais d'accès des terminaux demandeurs par rapport à la référence, puis d'ordonner la transmission des messages d'acquittement aux terminaux demandeurs à des instants choisis en fonction de leurs délais d'accès respectifs, afin qu'ils puissent les recevoir dans l'intervalle temporel d'acquittement défini préalablement,
- des moyens de traitement chargés de réceptionner les signaux, représentatifs des demandes d'accès, pendant toute la durée d'un sous-intervalle, puis d'associer un délai d'accès à chaque demande d'accès reçue pendant ce sous-intervalle en fonction de la fenêtre temporelle de traitement au cours de laquelle il a été reçu, puis d'ordonner la transmission des messages d'acquittement aux terminaux demandeurs à des instants choisis en fonction de leurs délais d'accès respectifs, afin qu'ils puissent les recevoir dans l'intervalle temporel d'acquittement défini préalablement.

L'invention porte également sur une station de base (ou « gateway »), pour un réseau de communications à accès aléatoire, équipée d'un dispositif de gestion de communications du type de celui présenté ci-avant.

L'invention est particulièrement bien adaptée, bien que de façon non exclusive à la gestion des communications de terminaux de communication de type 3G, comme par exemple les terminaux de communication 3G de type UMTS fonctionnant en mode dit de duplexage en fréquence (ou FDD pour « Frequency Division Dupleix »). Par ailleurs, l'invention est particulièrement bien adaptée aux réseaux de communications comportant un ou plusieurs satellites de communications ou des relais ou répéteurs radio, éventuellement de type satellitaire, reliés à une station de base, et induisant une dispersion importante des temps de propagation des signaux.

D'autres caractéristiques et avantages de l'invention apparaîtront à l'examen de la description détaillée ci-après, et des dessins annexés, sur lesquels :
- la figure 1 illustre de façon schématique un exemple de réalisation d'une partie d'un réseau de communications satellitaire comprenant une station de base équipée d'un dispositif selon l'invention,
- la figure 2 illustre de façon schématique un exemple de décomposition d'un intervalle temporel (IT) en tranches (T, TA et TI) et en sous-intervalles (SI) de trois tranches, et
- la figure 3 illustre de façon schématique un exemple de définition de fenêtres temporelles de traitement pour l'acquisition (ou réception) en parallèle de signaux définissant des préambules de demande d'accès au réseau.

Les dessins annexés pourront non seulement servir à compléter l'invention, mais aussi contribuer à sa définition, le cas échéant.

L'invention a pour objet de permettre l'adaptation de l'accès aléatoire à un réseau de communications à zone(s) de couverture de grande taille.

Dans la description qui suit, on considère, à titre d'exemple illustratif, que le réseau de communications est de type satellitaire et dispose d'un mécanisme d'accès de type slotted ALOHA, présenté dans la partie introductive. Mais, l'invention n'est pas limitée à ce seul type de réseau. Elle concerne en effet tous les réseaux de communications présentant une dispersion (ou divergence) importante des temps de propagation des signaux et auxquels des terminaux de communication peuvent accéder grâce à une procédure d'accès aléatoire reposant sur l'émission d'un préambule pendant des tranches temporelles d'accès (ou « slot »). Ainsi, l'invention concerne également les réseaux de communications comportant des relais ou répéteurs radio, éventuellement de type satellitaire, induisant une importante dispersion des temps de propagation des signaux.

On entend ici par « terminal de communication », tout équipement de réseau, et notamment les équipements d'utilisateurs, tels que les ordinateurs fixes ou portables, les téléphones portables, ou les assistants personnels numériques (ou PDA), ou les serveurs, capables d'échanger des données sous la forme de signaux, soit entre-eux via leur réseau de rattachement, soit avec ledit réseau de rattachement.

Par ailleurs, on considère dans ce qui suit, à titre d'exemple illustratif, que les terminaux sont des équipements d'utilisateurs (UE) de type téléphone portable, rattachés à un réseau de communication de type 3G, tel qu'un réseau UMTS, et fonctionnant selon le mode dit de duplexage en fréquence (ou FDD pour « Frequency Division Duplex»).

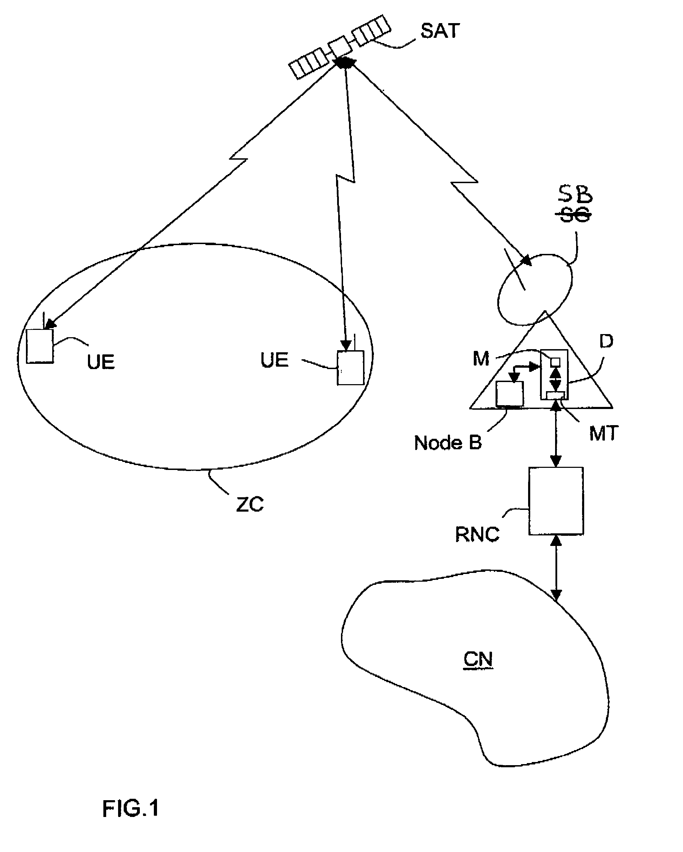

Comme illustré sur la figure 1, un réseau UMTS à accès satellitaire peut, d'une façon très schématique mais néanmoins suffisante à la compréhension de l'invention, être résumé à un coeur de réseau (ou « Core Network » (CN)) couplé à un réseau d'accès.

Le réseau d'accès satellitaire comporte, d'une part, au moins une station de base satellitaire SB (ou « Gateway ») raccordée au Core Network CN par un noeud d'accès appelé RNC (pour « Radio Network Controller »), et intégrant un Node B du réseau UMTS, et d'autre part, au moins un satellite SAT propre à échanger des données par voie d'ondes avec la station de base satellitaire SB et avec des équipements d'utilisateurs UE, tels que des téléphones mobiles équipés d'un émetteur/récepteur satellitaire. Le lien satellite constitue une interface satellite. Par ailleurs, le RNC assure à la fois le service et le contrôle. On parle alors de « controlling et serving RNC ».

Le Node B est chargé du traitement du signal au sein de la station de base SB. Il est par ailleurs associé à une ou plusieurs cellules couvrant chacune une zone radio dans laquelle peuvent se trouver un ou plusieurs équipements d'utilisateurs UE. La ou les cellules d'un Node B, intégré dans une station de base satellitaire SB, sont comprises dans la zone de couverture ZC du satellite SAT associé à cette station de base satellitaire SB. La zone de couverture ZC est ici de grande taille, comme par exemple dans le cas de ce que l'homme de l'art appelle un spot satellite.

Dans ce type de réseau satellitaire, comme indiqué dans la partie introductive, lorsqu'un terminal UE souhaite communiquer un message contenant des données, il doit, lors de son premier accès au réseau, transmettre une demande d'accès (ou préambule) à la station de base satellitaire SB, ci-après appelée gateway. Pour ce faire, le terminal UE génère un préambule accompagné d'une signature qui, dans le cas d'un accès de type slotted ALOHA, s'étend sur une durée de N chips, par exemple N = 4096 chips. Dans le cas d'un réseau UMTS, la signature est choisie de façon aléatoire parmi 16 signatures.

Puis, le terminal UE transmet le préambule, sous forme de signaux radio, au satellite SAT qui couvre la cellule dans laquelle il est situé, en utilisant un canal à accès aléatoire dédié, appelé RACH (pour « Random Access Channel ») et dans une tranche temporelle d'accès autorisée. Le satellite SAT transmet ensuite le préambule signé à la gateway SB. La gateway SB doit alors mettre en oeuvre un mécanisme d'acquittement de la demande d'accès (ou préambule) reçue consistant tout d'abord à déduire de l'intervalle temporel pendant lequel il reçoit le préambule la tranche d'accès utilisée par le terminal demandeur UE, puis à déduire de cette tranche d'accès utilisée le délai d'accès.

On entend ici par « délai d'accès », le temps mis par une demande d'accès (ou préambule), générée par un terminal UE, pour parvenir au niveau de la gateway SB, via tous les éléments intermédiaires du réseau d'accès satellitaire (Node B et SAT, et leurs interfaces de liaison respectives).

Le délai d'accès variant en fonction de la position du terminal demandeur UE dans la zone de couverture ZC, un préambule émis par deux terminaux UE distants dans une même tranche temporelle d'accès T sera reçu par la gateway SB dans des intervalles temporels de réception différents (décalés). Or, dans un réseau à accès de type slotted ALOHA à chaque intervalle temporel de réception correspond une tranche temporelle d'accès, à laquelle correspond un délai d'accès fixe. Par conséquent, dans une zone de couverture ZC de grande taille, les préambules émis par les terminaux UE, placés au voisinage de sa frontière, peuvent être reçus dans des intervalles de réception qui ne correspondent pas à la tranche d'accès utilisée, ce qui peut générer des collisions de préambules, en réception, qui interdisent l'acquittement de ces préambules.

L'invention est destinée à remédier à cet inconvénient.

Elle propose à cet effet un dispositif de gestion de communications D implanté dans la gateway SB et comportant principalement un module de traitement MT, comme illustré sur la figure 1.

Le module de traitement MT est tout d'abord chargé de décomposer des intervalles temporels IT en un nombre entier de tranches dont la largeur est choisie égale à la durée d'une tranche d'accès T. Dans ce qui suit, on assimilera les tranches d'accès T, utilisées par les terminaux UE pour transmettre leurs préambules (ou demandes d'accès), aux tranches résultant de la décomposition des intervalles IT. Chaque tranche T présente donc une largeur supérieure ou égale à la durée d'un préambule (ou demande d'accès). Il est rappelé que la largeur d'une tranche est égale à 5120 chips (ce qui correspond à 1,3 ms), tandis que la largeur d'un préambule est, par exemple, égale à 4096 chips.

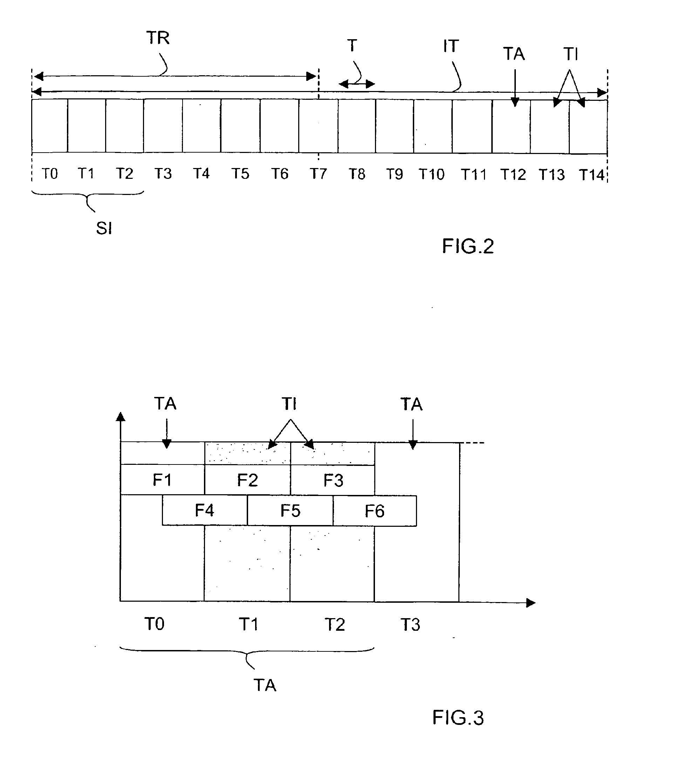

Comme illustré sur la figure 2, dans le cas d'un réseau UMTS chaque intervalle IT représente la durée maximale d'un message, soit 20 ms. En fait, un message peut s'étaler sur une ou deux trames radio TR de 10 ms chacune. Chaque tranche T d'intervalle IT présentant une largeur de 1,3 ms, un intervalle IT de 20 ms peut donc être décomposé en 15 tranches (T0 à T14).

Une fois cette décomposition effectuée, le module de traitement MT subdivise chaque intervalle IT en sous-intervalles SI comportant un nombre de tranches T consécutives au moins égal à deux. Dans l'exemple illustré sur la figure 2, chaque sous-intervalle SI comporte trois tranches T.

Puis, le module de traitement MT désigne dans chaque sous-intervalle SI au moins une tranche interdite TI correspondant à une tranche d'accès pendant laquelle les terminaux UE sont interdits de transmettre leurs préambules (ou demandes d'accès) au réseau. Les tranches T qui ne sont pas interdites d'utilisation sont appelées tranches autorisées TA. Elles correspondent aux tranches d'accès pendant lesquelles les terminaux UE sont autorisés à transmettre leurs préambules au réseau. Dans l'exemple illustré sur la figure 2, chaque sous-intervalle SI comporte une première tranche autorisée TA suivie de deux tranches interdites TI. Mais, bien entendu, d'autres arrangements peuvent être envisagés.

Le nombre de tranches T constituant un sous-intervalle SI et les nombres de tranches interdites TI et de tranches autorisées TA dans chaque sous-intervalle SI sont choisis de manière à couvrir la dispersion maximale des délais sur la zone de couverture ZC concernée.

Les informations concernant la durée des tranches d'accès, la cartographie des tranches d'accès, c'est-à-dire les tranches autorisées TA et les tranches interdites TI, les signatures, la durée d'attente minimale entre deux émissions de préambule en l'absence de réception de message d'acquittement (ou intervalle temporel d'acquittement), le délai entre l'émission d'un préambule acquitté et l'émission du message associé, et le nombre maximal de préambules pouvant être émis consécutivement, sont diffusées périodiquement, de façon classique, par la gateway SB, via le réseau d'accès, aux terminaux UE situés dans la zone de couverture ZC du satellite SAT.

Une fois la désignation effectuée, le module de traitement MT définit dans chaque sous-intervalle SI un nombre choisi de fenêtres temporelles de traitement F de largeur sensiblement égale à celle d'une tranche T et décalées temporellement. Le nombre de fenêtres temporelles de traitement F par sous-intervalle SI est au moins égal au nombre de tranches T que contient ledit sous-intervalle SI. Dans l'exemple de multi-fenêtrage illustré sur la figure 2, on a défini six fenêtres de traitement (F1 à F6) dans chaque sous-intervalle SI. Plus précisément, dans cet exemple trois fenêtres (F1 à F3) présentent une limite commune et s'étendent chacune sur une tranche T, et trois fenêtres (F4 à F6) s'étendent chacune sur deux moitiés de tranches T. La fenêtre F4 s'étend sur les tranches T0 et T1, la fenêtre F5 s'étend sur les tranches T1 et T2, et la fenêtre F6 s'étend sur les tranches T2 et T3. En d'autres termes, dans cet exemple la fenêtre F4 présente un taux de recouvrement de 50% avec les fenêtres F1 et F2, la fenêtre F5 présente un taux de recouvrement de 50% avec les fenêtres F2 et F3, et la fenêtre F6 présente un taux de recouvrement de 50% avec la fenêtre F3 et avec la fenêtre F1 du sous-intervalle SI suivant.

Bien entendu, d'autres arrangements de fenêtres temporelles de traitement F peuvent être envisagés, avec ou sans recouvrement.

Le module de traitement MT dispose ainsi de plusieurs fenêtres de traitement (ou de réception) décalées dans le temps mais associées à une tranche d'accès autorisée TA, si bien qu'il peut recevoir dans ces différentes fenêtres tous les préambules transmis dans la tranche d'accès autorisée TA quels que soient leurs délais d'accès respectifs. Dans l'exemple de la figure 2, les fenêtres F4 à F6 qui recouvrent les fenêtres F1 à F3 sont destinées à augmenter les chances de détection, mais surtout la précision de la détection.

En effet, lorsque le module de traitement MT reçoit un préambule (ou demande d'accès) transmis par un terminal demandeur UE, il peut déduire de la fenêtre dans laquelle il a été reçu (ou détecté) le délai d'accès du terminal demandeur UE par rapport à une référence temporelle. Cette référence temporelle correspond par exemple au délai minimal d'accès au réseau d'un terminal UE situé dans la zone de couverture ZC concernée. Par exemple, la première fenêtre F1 correspond à la référence temporelle et donc au délai d'accès minimal, tandis que la fenêtre F3 ou F6 correspond au délai d'accès maximal (c'est-à-dire celui qui présente la dispersion la plus grande).

Une fois que le module de traitement MT a déduit le délai d'accès d'un préambule, il peut déterminer, à partir de ce délai d'accès et de la durée d'attente prédéfinie entre deux émissions de préambules (périodiquement diffusée), l'instant où la gateway SB va devoir transmettre au terminal demandeur UE le message d'acquittement du préambule, de sorte que ledit terminal UE puisse le recevoir pendant cette durée d'attente prédéfinie.

Cet instant de transmission est bien entendu défini par rapport à la référence (ou base) de temps de la gateway SB.

Une fois que le module de traitement MT a déterminé un instant de transmission d'un message d'acquittement, il détermine préférentiellement, à partir du délai d'accès associé, l'instant où il va recevoir du terminal UE le message qu'il doit transmettre consécutivement à la réception du message d'acquittement.

Cet instant de réception est bien entendu défini par rapport à la référence (ou base) de temps de la gateway SB.

Préférentiellement, le module de traitement MT stocke dans une mémoire M du dispositif D chaque délai d'accès, précédemment déduit, en correspondance de l'identifiant du terminal demandeur UE correspondant.

Cela permet au module de traitement MT d'ordonner à sa gateway SB de se caler en réception sur chaque message qu'un terminal UE donné est susceptible de transmettre ultérieurement, compte tenu du délai d'accès qui est associé à son identifiant dans la mémoire M.

Le mécanisme de détermination de délai(s) d'accès peut être mis en oeuvre au moins de deux façons différentes.

La première façon est bien adaptée au multi-fenêtrage à recouvrement illustré sur la figure 2. Ici, le module de traitement MT réceptionne (ou acquiert) en parallèle sur chaque fenêtre temporelle de traitement F, définie dans un sous-intervalle SI, les signaux représentatifs des demandes d'accès. Il peut ainsi déterminer en parallèle les délais d'accès correspondant aux préambules reçus dans les différentes fenêtres temporelles de traitement F et ordonner à la gateway SB la transmission des messages d'acquittement aux terminaux demandeurs UE à des instants correspondant à leurs délais d'accès respectifs. Cela permet de réduire les temps de traitement et d'augmenter la capacité d'accès à la gateway SB et donc au réseau.

La seconde façon ne permet pas une parallélisation des traitements. Le module de traitement MT réceptionne (ou acquiert) les signaux, représentatifs des préambules (ou demandes d'accès), pendant toute la durée d'un sous-intervalle SI, en relevant leurs instants d'arrivée respectifs. Lorsque le sous-intervalle est écoulé, il se sert de la définition de ses fenêtres temporelles de traitement F pour déterminer à quelle fenêtre F appartient chaque préambule reçu pendant ledit sous-intervalle SI. Il peut alors associer un délai d'accès à chaque préambule reçu pendant le sous-intervalle SI en fonction de la fenêtre temporelle de traitement au cours de laquelle il a été reçu. Puis, le module de traitement MT peut ordonner à la gateway SB de transmettre des messages d'acquittement aux terminaux demandeurs UE à des instants correspondant à leurs délais d'accès respectifs, afin qu'ils puissent les recevoir dans l'intervalle temporel d'acquittement défini préalablement.

Dans l'une ou l'autre des deux façons, on restitue au minimum la capacité à recevoir sur toutes les tranches associées aux tranches d'accès autorisées TA, malgré les dispersions temporelles élevées induites par la taille de la zone de couverture ZC. L'invention permet ainsi d'utiliser une interface radio de type W-CDMA (notamment de type 3GPP UMTS en mode FDD) en tant qu'interface satellite de type IMT-2000.

Le dispositif de gestion D selon l'invention, et notamment son module de traitement PM ainsi qu'éventuellement sa mémoire M, peuvent être réalisés sous la forme de circuits électroniques, de modules logiciels (ou informatiques), ou d'une combinaison de circuits et de logiciels.

L'invention offre également un procédé de gestion de communications, pour un réseau de communications à accès aléatoire.

Celui-ci peut être notamment mis en oeuvre à l'aide du dispositif de gestion D et de la station de base (ou gateway) SB présentés ci-avant. Les fonctions et sous-fonctions principales et optionnelles assurées par les étapes de ce procédé étant sensiblement identiques à celles assurées par les différents moyens constituant le dispositif de gestion D et/ou la station de base (ou gateway) SB, seules seront résumées ci-après les étapes mettant en oeuvre les fonctions principales du procédé selon l'invention.

Ce procédé consiste :
- à décomposer des intervalles temporels IT en tranches T, associées chacune à une tranche d'accès pendant laquelle un terminal UE peut transmettre une demande d'accès au réseau, et de largeur choisie, supérieure ou égale à la durée d'une demande d'accès (ou préambule), puis à subdiviser ces intervalles temporels IT en sous-intervalles SI comportant un nombre de tranches T consécutives au moins égal à deux, et à interdire aux terminaux UE la transmission de leurs demandes d'accès pendant l'une au moins des tranches d'accès TI associées aux tranches T de chaque sous-intervalle SI tout en les y autorisant pendant les tranches d'accès non interdite TA,
- à définir dans chaque sous-intervalle SI un nombre, au moins égal au nombre de tranches T qu'il contient, de fenêtres temporelles de traitement F de largeur sensiblement égale à celle d'une tranche T et décalées temporellement, et
- à déduire de la fenêtre F d'appartenance d'une demande d'accès reçue au moins un délai d'accès du terminal demandeur UE par rapport à une référence, puis à transmettre un message d'acquittement à ce terminal demandeur UE à un instant choisi en fonction de ce délai d'accès, de sorte qu'il puisse le recevoir dans un intervalle temporel d'acquittement défini préalablement.

L'invention ne se limite pas aux modes de réalisation de dispositif de gestion, de station de base et de procédé de gestion décrits ci-avant, seulement à titre d'exemple, mais elle englobe toutes les variantes que pourra envisager l'homme de l'art dans le cadre des revendications ci-après.

Ainsi, dans la description qui précède il a été question d'un réseau de communications satellitaire à accès aléatoire, équipé d'une ou plusieurs stations de base satellitaires (ou gateways). Mais, l'invention n'est pas limitée à ce seul type de réseau à accès aléatoire. Elle concerne tous les réseaux de communications à accès aléatoire dans lesquels existe une importante dispersion (ou divergence) des temps de propagation des signaux entre une station de base (ou gateway) et des terminaux de communication, et notamment les réseaux de communications comportant des relais ou répéteurs radio, éventuellement de type satellitaire, reliés à une station de base.

## Revendications

1. Procédé de gestion de communications pour un réseau de communications à accès aléatoire, consistante :
- à décomposer des intervalles temporels (IT) en tranches (T), associées chacune à une tranche d'accès pendant laquelle un terminal (UE) peut transmettre une demande d'accès au réseau, et de largeur choisie supérieure ou égale à la durée d'une demande d'accès, puis à subdiviser lesdits intervalles temporels (IT) en sous-intervalles (SI) comportant un nombre de tranches consécutives au moins égal à deux, et à interdire aux terminaux la transmission de leurs demandes d'accès pendant l'une au moins des tranches d'accès associées auxdites tranches (T) de chaque sous-intervalle tout en les y autorisant pendant chaque autre tranche d'accès non interdite,
- à définir dans chaque sous-intervalle (SI) un nombre, au moins égal au nombre de tranches (T) qu'il contient, de fenêtres de traitement (F) de largeur sensiblement égale à celle d'une tranche (T) et décalées temporellement, et
- à déduire de la fenêtre d'appartenance (F) d'une demande d'accès reçue au moins un délai d'accès du terminal demandeur (UE) par rapport à une référence, puis à transmettre un message d'acquittement audit terminal demandeur (UE) à un instant choisi en fonction dudit délai d'accès, de sorte qu'il puisse le recevoir dans un intervalle temporel d'acquittement défini préalablement.

2. Procédé selon la revendication 1, **caractérisé en ce que** l'on déduit dudit délai d'accès un instant de réception d'un message transmis par un terminal (UE) consécutivement à la réception d'un message d'acquittement émis en réponse à une demande d'accès associée audit message.

3. Procédé selon l'une des revendications 1 et 2, **caractérisé en ce que** l'on stocke ledit délai d'accès en correspondance d'un identifiant du terminal demandeur (UE), de manière à pouvoir caler la réception de chaque message transmis par ledit terminal (UE).

4. Procédé selon l'une des revendications 1 à 3, **caractérisé en ce que** ledit nombre de tranches (T) d'un sous-intervalle (SI) est choisi de sorte qu'il corresponde à la dispersion maximale des délais d'accès des terminaux (UE) à l'intérieur d'une zone de couverture (ZC) dudit réseau.

5. Procédé selon l'une des revendications 1 à 4, **caractérisé en ce que** ledit nombre de tranches (T) d'un sous-intervalle (SI) est égal à trois.

6. Procédé selon la revendication 5, **caractérisé en ce que** l'on interdit l'utilisation de deux tranches (TI) consécutives sur trois au sein de chaque sous-intervalle (SI).

7. Procédé selon l'une des revendications 1 à 6, **caractérisé en ce que** certaines au moins desdites fenêtres temporelles de traitement (F) présentent une limite commune.

8. Procédé selon l'une des revendications 1 à 7, **caractérisé en ce que** certaines desdites fenêtres temporelles de traitement (F) présentent un recouvrement temporel.

9. Procédé selon la revendication 8, **caractérisé en ce que** ledit recouvrement temporel est sensiblement égal à 50%.

10. Procédé selon l'une des revendications 1 à 9, **caractérisé en ce que** ledit intervalle temporel (IT) est égal à n fois la durée d'une trame radio constituant ledit message associé à une demande d'accès, n étant supérieur ou égal à un.

11. Procédé selon l'une des revendications 1 à 10, **caractérisé en ce que** l'on réceptionne des signaux, représentatifs desdites demandes d'accès, en parallèle sur chacune des fenêtres temporelles de traitement (F) des sous-intervalles (SI), de manière à déduire en parallèle des fenêtres (F) d'appartenance respectives desdits signaux reçus des délais d'accès des terminaux demandeurs (UE) par rapport à ladite référence, puis on transmet des messages d'acquittement auxdits terminaux demandeurs (UE) à des instants choisis en fonction de leurs délais d'accès respectifs, de sorte qu'ils puissent les recevoir dans ledit intervalle temporel d'acquittement défini préalablement.

12. Procédé selon l'une des revendications 1 à 10, **caractérisé en ce que** l'on réceptionne des signaux représentatifs desdites demandes d'accès pendant l'intégralité de la durée de chaque sous-intervalle (SI), et l'on associe un délai d'accès à chaque demande d'accès reçue pendant ledit sous-intervalle (SI) en fonction de la fenêtre temporelle de traitement (F) au cours de laquelle il a été reçu, puis on transmet des messages d'acquittement auxdits terminaux demandeurs (UE) à des instants choisis en fonction de leurs délais d'accès respectifs, de sorte qu'ils puissent les recevoir dans ledit intervalle temporel d'acquittement défini préalablement.

13. Procédé selon l'une des revendications précédentes, pour la gestion des communications de terminaux de communication de type 3G.

14. Procédé selon la revendication 13, **caractérisé en ce que** ledit réseau de communications est un réseau UMTS fonctionnant en mode dit de duplexage en fréquence.

15. Procédé selon l'une des revendications 13 et 14. **caractérisé en ce que** lesdites communications s'effectuent dans des réseaux de communications à accès aléatoire et de type satellitaire.

16. Procédé selon l'une des revendications 13 et 14, **caractérisé en ce que** lesdites communications s'effectuent dans des réseaux de communications à accès aléatoire et à relais radio couplé(s) à une station de base.

17. Dispositif de gestion de communications (D) pour une station de base (SB) d'un réseau de communications à accès aléatoire, comprenant des moyens de traitement (MT) agencés pour :
- décomposer des intervalles temporels en tranches (T), associées chacune à une tranche d'accès pendant laquelle un terminal (UE) peut transmettre une demande d'accès au réseau, et de largeur choisie, supérieure ou égale à la durée d'une demande d'accès,
- subdiviser lesdits intervalles temporels (IT) en sous-intervalles (SI) comportant un nombre de tranches (T) consécutives au moins égal à deux,
- désigner dans chaque sous-intervalle (SI) au moins une tranche interdite (TI) associée à une tranche d'accès pendant laquelle les terminaux (UE) sont interdits de transmettre leurs demandes d'accès au réseau,
- définir dans chaque sous-intervalle (SI) un nombre, au moins égal au nombre de tranches (T) qu'il contient, de fenêtres temporelles de traitement (F) de largeur sensiblement égale à celle d'une tranche (T) et décalées temporellement, et
- en cas de réception d'une demande d'accès transmise par un terminal demandeur (UE), déduire de la fenêtre (F) d'appartenance de ladite demande d'accès au moins un délai d'accès du terminal demandeur (UE) par rapport à une référence, puis déterminer à partir dudit délai d'accès un instant de transmission audit terminal demandeur (UE) d'un message d'acquittement, de sorte qu'il puisse le recevoir dans un intervalle temporel d'acquittement défini préalablement.

18. Dispositif selon la revendication 17, **caractérisé en ce que** lesdits moyens de traitement (MT) sont agencés pour déterminer à partir dudit délai d'accès un instant de réception d'un message transmis par un terminal (UE) consécutivement à la réception d'un message d'acquittement émis en réponse à une demande d'accès associée audit message.

19. Dispositif selon l'une des revendications 17 et 18, **caractérisé en ce qu'**il comprend une mémoire (M) propre à stocker, sur ordre desdits moyens de traitement (MT), chaque délai d'accès déduit en correspondance d'un identifiant du terminal demandeur (UE), et **en ce que** lesdits moyens de traitement (MT) sont agencés pour ordonner le calage en réception de ladite station de base (SB) sur chaque message transmis par un terminal (UE) en fonction du délai d'accès associé à son identifiant dans ladite mémoire (M).

20. Dispositif selon l'une des revendications 17 à 19, **caractérisé en ce que** ledit nombre de tranches (T) d'un sous-intervalle (SI) est choisi de sorte qu'il corresponde à la dispersion maximale des délais d'accès des terminaux (UE) situés à l'intérieur d'une zone de couverture (ZC) dudit réseau.

21. Dispositif selon l'une des revendications 173 à 20, **caractérisé en ce que** ledit nombre de tranches (T) d'un sous-intervalle (SI) est égal à trois.

22. Dispositif selon la revendication 21, **caractérisé en ce que** lesdits moyens de traitement (MT) sont agencés pour désigner sur ordre deux tranches d'accès interdites (TI) consécutives sur trois au sein de chaque sous-intervalle (SI).

23. Dispositif selon l'une des revendications 17 à 22, **caractérisé en ce que** lesdits moyens de traitement (MT) sont agencés pour définir certaines au moins desdites fenêtres temporelles de traitement (F) de sorte qu'elles présentent deux à deux une limite commune.

24. Dispositif selon l'une des revendications 17 à 22, **caractérisé en ce que** lesdits moyens de traitement (MT) sont agencés pour définir certaines au moins desdites fenêtres temporelles de traitement (F) de sorte qu'elles présentent un recouvrement temporel.

25. Dispositif selon la revendication 24, **caractérisé en ce que** ledit recouvrement temporel est sensiblement égal à 50%.

26. Dispositif selon l'une des revendications 17 à 25, **caractérisé en ce que** ledit intervalle temporel (IT) est égal à n fois la durée d'une trame radio constituant ledit message associé à une demande d'accès, n étant supérieur ou égal à un.

27. Dispositif selon l'une des revendications 17 à 26, **caractérisé en ce que** lesdits moyens de traitement (MT) sont agencés pour réceptionner des signaux, représentatifs desdites demandes d'accès, en parallèle sur chacune des fenêtres temporelles de traitement (F) des sous-intervalles (SI), de manière à déduire en parallèle des fenêtres d'appartenance (F) respectives desdits signaux reçus des délais d'accès des terminaux demandeurs (UE) par rapport à ladite référence, puis pour ordonner la transmission des messages d'acquittement auxdits terminaux demandeurs (UE) à des instants choisis en fonction de leurs délais d'accès respectifs, de sorte qu'ils puissent les recevoir dans ledit intervalle temporel d'acquittement défini préalablement.

28. Dispositif selon l'une des revendications 17 à 26, **caractérisé en ce que** lesdits moyens de traitement (MT) sont agencés pour réceptionner des signaux représentatifs desdites demandes d'accès pendant l'intégralité de la durée de chaque sous-intervalle (SI), puis pour associer un délai d'accès à chaque demande d'accès reçue pendant ledit sous-intervalle (SI) en fonction de la fenêtre temporelle de traitement (F) au cours de laquelle il a été reçu, puis pour ordonner la transmission des messages d'acquittement auxdits terminaux demandeurs (UE) à des instants choisis en fonction de leurs délais d'accès respectifs, de sorte qu'ils puissent les recevoir dans ledit intervalle temporel d'acquittement défini préalablement.

29. Station de base (SB) pour un réseau de communications à accès aléatoire, **caractérisée en ce qu'**elle comprend au moins un dispositif de gestion de communications (D) selon l'une des revendications 17 à 28.

## Claims

1. Communication management method for a random access communication network, consisting in:
- dividing time intervals (IT) into time slots (T) each associated with an access time slot during which a terminal (UE) can send an access request to the network, and of selected width greater than or equal to the duration of an access request and then divide those time intervals (IT) into sub-intervals (SI) including at least two consecutive time slots and prohibit the terminals from sending access requests during at least one of the access time slots associated with the time slots (T) of each sub-interval at the same time as authorising them to do so during non-prohibited access time slots,
- defining in each sub-interval (SI) a number, at least equal to the number of time slots (T) that it contains, of processing windows (F) offset in time and of width substantially equal to that of a time slot (T), and
- deducing from the window (F) to which a received access request belongs at least one access delay of the requesting terminal (UE) relative to a reference and then sending an acknowledgement message to that requesting terminal (UE) at a moment selected as a function of said access delay so that it can receive it in a predefined acknowledgement time interval.

2. Method according to claim 1, **characterised in that** a reception time of a message transmitted by a terminal (UE) consecutively to the reception of an acknowledgement message sent in response to an access request associated with said message is deduced from said access delay.

3. Method according to either claim 1 or claim 2, **characterised in that** said access delay is stored in corresponding relationship to an identifier of the requesting terminal (UE) so as to be able to time the reception of each message sent by said terminal (UE).

4. Method according to any one of claims 1 to 3, **characterised in that** said number of time slots (T) of a sub-interval (SI) is selected so that it corresponds to the maximum spread of the access delays of the terminals (UE) in a coverage area (ZC) of said network.

5. Method according to any one of claims 1 to 4, **characterised in that** said number of time slots (T) of a sub-interval (Sl) is equal to three.

6. Method according to claim 5, **characterised in that** the use of two consecutive time slots (TI) of three time slots in each sub-interval (Sl) is prohibited.

7. Method according to any one of claims 1 to 6, **characterised in that** at least certain of said processing time windows (F) have a common limit.

8. Method according to any one of claims 1 to 7, **characterised in that** certain of said processing time windows (F) have a time overlap.

9. Method according to claim 8, **characterised in that** said time overlap is substantially equal to 50%.

10. Method according to any one of claims 1 to 9, **characterised in that** said time interval (IT) is equal to n times the duration of a radio frame constituting said message associated with an access request, n being greater than or equal to 1.

11. Method according to any one of claims 1 to 10, **characterised in that** signals representing said access requests are received in parallel over each of the processing time windows (F) of the sub-intervals (SI) so as to deduce in parallel respective windows (F) to which said received signals belong from the access delays of the requesting terminals (UE) relative to said reference, after which acknowledgement messages are sent to said requesting terminals (UE) at times selected as a function of their respective access delays, so that they are able to receive them in said predefined acknowledgement time interval.

12. Method according to any one of claims 1 to 10, **characterised in that** signals representing said access requests are received throughout the duration of each sub-interval (Sl) and an access delay is associated with each access request received during said sub-interval (Sl) as a function of the processing time window (F) during which it was received, after which acknowledgement messages are sent to said requesting terminals (UE) at times selected as a function of their respective access times so that they can receive them in said predefined acknowledgement time interval.

13. Method according to any one of the preceding claims for managing calls of 3G type communication terminals.

14. Method according to claim 13, **characterized in that** said communication network is a UMTS network operating in frequency duplex mode.

15. Method according to either claim 13 or claim 14, **characterized in that** said calls are made in satellite type random access communication networks.

16. Method according to either claim 13 or claim 14, **characterized in that** said calls are made in random access communication networks with radio relay stations coupled to a base station.

17. Communication management device (D) for a base station (SB) of a random access communication network, comprising processing means (MT) adapted to:
- divide time intervals into time slots (T) each associated with an access time slot during which a terminal (UE) is able to send an access request to the network and of selected width greater than or equal to the duration of an access request,
- divide said time intervals (IT) into sub-intervals (Sl) including at least two consecutive time slots (T),
- designate in each sub-interval (Sl) at least one prohibited time slot (TI) associated with an access time slot during which the terminals (UE) are prohibited from sending their access requests to the network,
- define in each sub-interval (Sl) a number, at least equal to the number of time slots (T) that it contains, of processing time windows (F) offset in time and of width substantially equal to that of a time slot (T), and
- in the event of reception of an access request sent by a requesting terminal (UE), deduce from the window (F) to which said access request belongs at least one access delay of the requesting terminal (UE) relative to a reference and then to determine from said access delay a time of sending an acknowledgement message to said requesting terminal (UE) so that it is able to receive it in a predefined acknowledgement time slot.

18. Device according to claim 17, **characterised in that** said processing means (MT) are adapted to determine from said access delay a time of receiving a message sent by a terminal (UE) consecutively to the receipt of an acknowledgement message sent in response to an access request associated with said message.

19. Device according to either claim 17 or claim 18, **characterised in that** it comprises a memory (M) adapted, on the instructions of said processing means (MT), to store each deduced access delay in corresponding relationship to an identifier of the requesting terminal (UE) and said processing means (MT) are adapted to instruct the receive timing of said base station (SB) to be locked to each message sent by a terminal (UE) as a function of the access delay associated with its identifier in said memory (M).

20. Device according to any one of claims 17 to 19, **characterised in that** said number of time slots (T) of a sub-interval (SI) is selected so that it corresponds to the maximum spread of the access delays of the terminals (UE) situated in a coverage area (ZC) of said network.

21. Device according to any one of claims 17 to 20, **characterised in that** said number of time slots (T) of a sub-interval (Sl) is equal to three.

22. Device according to claim 21, **characterised in that** said processing means (MT) are adapted to designate on command two consecutive prohibited access time slots (TI) of three time slots in each sub-interval (Sl).

23. Device according to any one of claims 17 to 22, **characterised in that** said processing means (MT) are adapted to define at least certain of said processing time windows (F) so that pairs of them have a common limit.

24. Device according to any one of claims 17 to 22, **characterised in that** said processing means (MT) are adapted to define at least certain of said processing time windows (F) so that they have a time overlap.

25. Device according to claim 24, **characterised in that** said time overlap is substantially equal to 50%.

26. Device according to any one of claims 17 to 25, **characterised in that** said time interval (IT) is equal to n times the duration of a radio frame constituting said message associated with an access request, n being greater than or equal to one.

27. Device according to any one of claims 17 to 26, **characterised in that** said processing means (MT) are adapted to receive signals representing said access requests in parallel over each of the processing time windows (F) of the sub-intervals (SI) so as to deduce in parallel respective windows (F) to which said received signals belong from the access delays of the requesting terminals (UE) relative to said reference, and then to command the sending of acknowledgement messages to said requesting terminals (UE) at times selected as a function of their respective access delays, so that they are able to receive them in said predefined acknowledgement time interval.

28. Device according to any one of claims 17 to 26, **characterised in that** said processing means (MT) are adapted to receive signals representing said access requests throughout the duration of each sub-interval (Sl) and then to associate an access delay with each access request received during said sub-interval (SI) as a function of the processing time window (F) during which it was received, and then to command the sending of acknowledgement messages to said requesting terminals (UE) at times selected as a function of their respective access delays so that they can receive them in said predefined acknowledgement time interval.

29. Base station (SB) for a random access communication network, **characterised in that** it comprises at least one communication management device (D) according to any one of claims 17 to 28.

## Patentansprüche

1. Verfahren zur Kommunikationsverwaltung in einem Random Access Netzwerk, das Folgendes umfasst:
- Untergliederung von Zeitschlitzen (IT) in Abschnitte (T), die jeweils einem Zugriffsabschnitt zugeordnet sind, während dessen ein Endgerät (UE) eine Zugriffsanforderung an das Netz übermitteln kann, und die eine Länge aufweisen, die über oder gleich der Dauer einer Zugriffsanforderung gewählt wird, anschließend Unterteilung der genannten Zeitschlitze (IT) in Subintervalle (SI), die eine Anzahl von mindestens zwei aufeinander folgenden Abschnitten umfassen, und Sperrung der Übertragung von Zugriffsanforderungen durch die Endgeräte während mindestens eines der Zugriffsabschnitte, die den genannten Abschnitten (T) jedes Subintervalls zugeordnet sind, wobei diese während jedes anderen, nicht gesperrten Zugriffsabschnitts freigegeben sind,
- Definition einer Anzahl an Verarbeitungsfenstern (F) in jedem Subintervall (SI), die mindestens der Anzahl an darin enthaltenen Abschnitten (T) entspricht, deren Breite etwa gleich der eines Abschnitts (T) ist und die zeitlich verschoben sind, und
- Ableitung mindestens einer Zugriffsverzögerung des Anfrage-Endgeräts (UE) in Bezug auf eine Referenz, ausgehend von dem Zugehörigkeitsfenster (F) einer empfangenen Zugriffsanforderung, anschließend Übermittlung einer Bestätigungsmeldung an das genannte Anfrage-Endgerät (UE) zu einem Zeitpunkt, der in Abhängigkeit von der genannten Zugriffsverzögerung gewählt wird, so dass es diese in einem vorab definierten Bestätigungszeitschlitz empfangen kann.

2. Verfahren gemäß Anspruch 1, **dadurch gekennzeichnet, dass** man von der genannten Zugriffsverzögerung einen Empfangszeitpunkt für eine von einem Endgerät (UE) nach dem Empfang einer Bestätigungsmeldung übermittelte Meldung ableitet, die als Reaktion auf eine Zugriffsanforderung übermittelt wird, die der genannten Meldung zugeordnet ist.

3. Verfahren gemäß einem der Ansprüche 1 und 2, **dadurch gekennzeichnet, dass** man die genannte Zugriffsverzögerung in Übereinstimung mit der Kennung des Anfrage-Endgeräts (UE) speichert, so dass man den Empfang jeder von dem genannten Endgerät (UE) übertragenen Meldung blockieren kann.

4. Verfahren gemäß einem der Ansprüche 1 bis 3, **dadurch gekennzeichnet, dass** die genannte Anzahl an Abschnitten (T) eines Subintervalls (SI) so gewählt wird, dass sie der maximalen Streuung der Zugriffsverzögerungen der Endgeräte (UE) innerhalb des Abdeckungsbereichs (ZC) des genannten Netzwerks entspricht.

5. Verfahren gemäß einem der Ansprüche 1 bis 4, **dadurch gekennzeichnet, dass** die genannte Anzahl an Abschnitten (T) eines Subintervalls (SI) gleich drei ist.

6. Verfahren gemäß Anspruch 5, **dadurch gekennzeichnet, dass** man die Nutzung von zwei aufeinander folgenden Abschnitten (TI) von dreien innerhalb jedes Subintervalls (SI) sperrt.

7. Verfahren gemäß einem der Ansprüche 1 bis 6, **dadurch gekennzeichnet, dass** zumindest einige der genannten Verarbeitungszeitfenster (F) eine gemeinsame Grenze aufweisen.

8. Verfahren gemäß einem der Ansprüche 1 bis 7, **dadurch gekennzeichnet, dass** die genannten Verarbeitungszeitfenster (F) eine zeitliche Überlagerung aufweisen.

9. Verfahren gemäß Anspruch 8, **dadurch gekennzeichnet, dass** die genannte zeitliche Überlagerung etwa gleich 50 % beträgt.

10. Verfahren gemäß einem der Ansprüche 1 bis 9, **dadurch gekennzeichnet, dass** der genannte Zeitschlitz (IT) gleich n Mal der Dauer des Funkrasters entspricht, aus dem die genannte Meldung besteht, die einer Zugriffsanforderung zugeordnet ist, wobei n größer oder gleich eins ist.

11. Verfahren gemäß einem der Ansprüche 1 bis 10, **dadurch gekennzeichnet, dass** man parallel in jedem der Verarbeitungszeitfenster (F) der Subintervalle (SI) Signale empfängt, die für die genannten Zugriffsanforderungen repräsentativ sind, so dass man daraus parallel die jeweiligen Zugehörigkeitsfenster (F) für die empfangenen Signale der Zugriffsverzögerungen der Anfrage-Endgeräte (UE) in Bezug auf die genannte Referenz ableiten kann, anschließend überträgt man Bestätigungsmeldungen an die genannten Anfrage-Endgeräte (UE), zu Zeitpunkten, die in Abhängigkeit von ihren jeweiligen Zugriffsverzögerungen gewählt werden, so dass sie diese innerhalb des vorab definierten Bestätigungszeitschlitzes empfangen können.

12. Verfahren gemäß einem der Ansprüche 1 bis 10, **dadurch gekennzeichnet, dass** man während der gesamten Dauer jedes Subintervalls (SI) Signale empfängt, die für die genannten Zugriffsanforderungen repräsentativ sind, und dass man jeder, während des genannten Subintervalls (SI) empfangenen Zugriffsanforderung eine Zugriffsverzögerung in Abhängigkeit von dem Verarbeitungszeitfenster (F), in der sie empfangen wurde, zuordnet, anschließend überträgt man Bestätigungsmeldungen an die genannten Anfrage-Endgeräte (UE), und zwar zu Zeitpunkten, die in Abhängigkeit von ihren jeweiligen Zugriffsverzögerungen gewählt werden, so dass sie diese innerhalb des vorab definierten Bestätigungszeitschlitzes empfangen können.

13. Verfahren gemäß einem der vorgenannten Ansprüche zur Kommunikationsverwaltung von Kommunikations-Endgeräten vom Typ 3G.

14. Verfahren gemäß Anspruch 13, **dadurch gekennzeichnet, dass** das es sich bei dem genannten Kommunikationsnetzwerk um ein UMTS-Netz handelt, das im so genannten Frequenzduplex-Modus arbeitet.

15. Verfahren gemäß einem der Ansprüche 13 und 14, **dadurch gekennzeichnet, dass** die genannten Kommunikationen in Random Access Satelliten-Netzwerken erfolgen.

16. Verfahren gemäß einem der Ansprüche 13 und 14, **dadurch gekennzeichnet, dass** die genannten Kommunikationen in Random Access Netzwerken mit Funkempfang, die an eine Basisstation gekoppelt sind, erfolgen.

17. Vorrichtung zur Kommunikationsverwaltung (D) für eine Basisstation (SB) in einem Random Access Netzwerk, die Verarbeitungsmittel (MT) umfasst, die geeignet sind für:
- die Untergliederung von Zeitschlitzen in Abschnitte (T), die jeweils einem Zugriffsabschnitt zugeordnet sind, während dessen ein Endgerät (UE) eine Zugriffsanforderung an das Netz übermitteln kann, und die eine Länge aufweisen, die über oder gleich der Dauer einer Zugriffsanforderung gewählt wird,
- die Unterteilung der genannten Zeitschlitze (IT) in Subintervalle (SI), die eine Anzahl von mindestens zwei aufeinander folgenden Abschnitten (T) umfassen,
- die Bezeichnung mindestens eines gesperrten Abschnitts (TI) in jedem Subintervall (SI), der einem Zugriffsabschnitt zugeordnet ist, während dessen die Endgeräte (UE) ihre Zugriffsanforderungen nicht an das Netzwerk übertragen können,
- die Definition einer Anzahl an Bearbeitungszeitfenstern (F) in jedem Subintervall (SI), die mindestens gleich der Anzahl an darin enthaltenen Abschnitten (T) entspricht, deren Breite etwa gleich der eines Abschnitts (T) ist und die zeitlich verschoben sind, und
- im Fall des Empfangs einer von einem Anfrage-Endgerät (UE) übermittelten Zugriffsanfrage, die Ableitung mindestens einer Zugriffsverzögerung des Anfrage-Endgeräts (UE) in Bezug auf eine Referenz, ausgehend von dem Zugehörigkeitsfenster (F) der genannten Zugriffsanforderung, anschließend die Bestimmung, ausgehend von der genannten Zugriffsverzögerung, des Übertragungszeitpunkts einer Bestätigungsmeldung an das genannte Anfrage-Endgerät (UE), so dass es diese in einem vorab definierten Bestätigungszeitschlitz empfangen kann.

18. Vorrichtung gemäß Anspruch 17, **dadurch gekennzeichnet, dass** die genannten Verarbeitungsmittel (MT) so aufgebaut sind, dass sie ausgehend von der genannten Zugriffsverzögerung den Zeitpunkt für den Empfang einer Meldung ermitteln, die von einem Endgerät (UE) nach dem Empfang einer Bestätigungsmeldung übertragen wird, die als Antwort auf eine Zugriffsanforderung versandt wurde, die der genannten Meldung zugeordnet ist.

19. Vorrichtung gemäß einem der Ansprüche 17 und 18, **dadurch gekennzeichnet, dass** sie einen speziellen Speicher (M) umfasst, um auf Befehl der genannten Verarbeitungsmittel (MT) jede Zugriffsverzögerung zu speichern, die in Übereinstimmung mit der Kennung des Anfrage-Endgeräts (UE) abgeleitet wird, sowie **dadurch**, dass die genannten Verarbeitungsmittel (MT) so aufgebaut sind, dass sie die Blockierung des Empfangs jeder Meldung in der genannten Basisstation (SB), die von einem Endgerät (UE) übertragen wird, in Abhängigkeit von der Zugriffsverzögerung, die der Kennung in dem genannten Speicher (M) zugeordnet ist, anordnen können.

20. Vorrichtung gemäß einem der Ansprüche 17 bis 19, **dadurch gekennzeichnet, dass** die genannte Anzahl an Abschnitten (T) eines Subintervalls (SI) so gewählt wird, dass sie der maximalen Streuung der Zugriffsverzögerungen der Endgeräte (UE) entspricht, die sich innerhalb des Abdeckungsbereichs (ZC) des genannten Netzwerks befinden.

21. Vorrichtung gemäß einem der Ansprüche 17 bis 20, **dadurch gekennzeichnet, dass** die genannte Anzahl an Abschnitten (T) eines Subintervalls (SI) gleich drei ist.

22. Vorrichtung gemäß Anspruch 21, **dadurch gekennzeichnet, dass** die genannten Verarbeitungsvorrichtungen (MT) entsprechend angeordnet sind, um auf Befehl zwei aufeinander folgende, gesperrte Zugriffsabschnitte (TI) von dreien innerhalb jedes Subintervalls (SI) zu bezeichnen.

23. Vorrichtung gemäß einem der Ansprüche 17 bis 22, **dadurch gekennzeichnet, dass** die genannten Verarbeitungsvorrichtungen (MT) entsprechend angeordnet sind, um mindestens einige der genannten Verarbeitungszeitfenster (F) zu definieren, so dass sie jeweils paarweise gemeinsame Grenzen aufweisen.

24. Vorrichtung gemäß einem der Ansprüche 17 bis 22, **dadurch gekennzeichnet, dass** die genannten Verarbeitungsvorrichtungen (MT) entsprechend angeordnet sind, um mindestens einige der genannten Verarbeitungszeitfenster (F) zu definieren, so dass sie eine zeitliche Überlagerung aufweisen.

25. Vorrichtung gemäß Anspruch 24, **dadurch gekennzeichnet, dass** die genannte zeitliche Überlagerung etwa gleich 50 % beträgt.

26. Vorrichtung gemäß einem der Ansprüche 17 bis 25, **dadurch gekennzeichnet, dass** der genannte Zeitschlitz (IT) gleich n Mal der Dauer des Funkrasters beträgt, das die genannte Meldung umfasst, die einer Zugriffsanforderung zugeordnet ist, wobei n größer oder gleich eins ist.

27. Vorrichtung gemäß einem der Ansprüche 17 bis 26, **dadurch gekennzeichnet, dass** die genannten Verarbeitungsmittel (MT) so angeordnet sind, dass sie parallel in jedem der Verarbeitungszeitfenster (F) der Subintervalle (SI) Signale empfangen können, die für die genannten Zugriffsanforderungen repräsentativ sind, um daraus parallel die jeweiligen Zugehörigkeitsfenster (F) für die empfangenen Signale der Zugriffsanforderungen der Anfrage-Endgeräte (UE) in Bezug auf die genannte Referenz abzuleiten, und anschließend die Übertragung der Bestätigungsmeldungen an die genannten Anfrage-Endgeräte (UE) zu Zeitpunkten zu befehlen, die in Abhängigkeit von ihren jeweiligen Zugriffsverzögerungen gewählt werden, so dass sie diese in dem genannten, vorab definierten Bestätigungszeitschlitz empfangen können.

28. Vorrichtung gemäß einem der Ansprüche 17 bis 26, **dadurch gekennzeichnet, dass** die genannten Verarbeitungsmittel (MT) entsprechend angeordnet sind, um während der gesamten Dauer jedes Subintervalls (SI) Signale zu empfangen, die für die genannten Zugriffsanforderungen repräsentativ sind, anschließend jeder während des genannten Subintervalls (SI) empfangenen Zugriffsanforderung eine Zugriffsverzögerung in Abhängigkeit von dem Verarbeitungszeitfenster (F) zuzuordnen, in dem sie empfangen wurden, anschließend die Übertragung von Bestätigungsmeldungen an die genannten Anfrage-Endgeräte (UE) zu Zeitpunkten zu veranlassen, die in Abhängigkeit von ihren jeweiligen Zugriffsverzögerungen gewählt werden, so dass sie diese innerhalb des genannten, vorab definierten Bestätigungszeitschlitzes empfangen können.

29. Basisstation (SB) für ein Random Access Netzwerk, **dadurch gekennzeichnet, dass** sie mindestens eine Vorrichtung zur Kommunikationsverwaltung (D) gemäß einem der Ansprüche 17 bis 28 umfasst.
